Europäisches Patentamt

European Patent Office

Office européen des brevets

(18)

(11) Veröffentlichungsnummer: **0 094 003**
**B1**

(12) **EUROPÄISCHE PATENTSCHRIFT**

(45) Veröffentlichungstag der Patentschrift: **02.03.88**

(21) Anmeldenummer: **83104342.7**

(22) Anmeldetag: **03.05.83**

(51) Int. Cl.$^4$: **C 01 G 19/08**

(54) Verfahren zur Herstellung von Zinn-(IV)-chlorid.

(30) Priorität: **07.05.82 DE 3217143**

(43) Veröffentlichungstag der Anmeldung:
**16.11.83 Patentblatt 83/46**

(45) Bekanntmachung des Hinweises auf die
Patenterteilung:
**02.03.88 Patentblatt 88/09**

(84) Benannte Vertragsstaaten:
**CH DE GB LI NL**

(56) Entgegenhaltungen:
**EP-A-0 057 929**
**CH-A- 100 702**
**US-A-1 897 360**

(73) Patentinhaber: **HOECHST
AKTIENGESELLSCHAFT
Postfach 80 03 20
D-6230 Frankfurt am Main 80 (DE)**

(72) Erfinder: **Schmidt, Werner, Dr.
Hoher Göllweg 4
D-8261 Burgkirchen/Alz (DE)**

EP 0 094 003 B1

Courier Press, Leamington Spa, England.

## Beschreibung

Gegenstand der Erfindung ist ein Verfahren zur Herstellung von Zinn-(IV)-chlorid entsprechend Patentanspruch 1.

Zinn-(IV)-chlorid ist schon lange bekannt. Es wird meistens aus metallischem Zinn und Chlor hergestellt. Für diese direkte Erzeugung aus den Elementen sind eine Reihe von Verfahren bekannt, bei den beispielsweise gasförmiges Chlor in geschmolzenes Zinn eingeleitet und das gasförmig entweichende Zinn-(IV)-chlorid fraktioniert kondensiert wird. Ein anderes Verfahren beschreibt die Verspühung von geschmolzenem Zinn in einer Chlorgas-Atmosphäre und anschließende Kondensation des gebildeten Zinn-(IV)-chlorids. Bei einen weiteren bekannten Verfahren wird Chlorgas zunächst von unten nach oben durch geschmolzenes Zinn geleitet, das dabei entstandene Gemisch von Chlor und gasförmigem Zinn-(IV)-chlorid anschließend über die Oberflächen von weiterem geschmolzenem Zinn geleitet und danach das gebildete Zinn-(IV)-chlorid aus dem Gasgemisch durch Kondensation abgetrennt.

Der Nachteil dieser Verfahren ist, daß durch die hohe Bildungswärme des Zinn-(IV)-chlorids die Reaktion schwer beherrschbar ist, das metallische Zinn kann bis zum Glühen erhitzt werden beziehungsweise unter Feuererscheinung reagieren. Das stürmisch gasförmig entweichende Zinn-(IV)-chlorid, gegebenenfalls in Mischung mit nichtumgesetztem Chlorgas, kann Zinnpartikel mitreiBen, was zu Schwierigkeiten führen kann.

Ein weiteres Problem stellt die Bildung von Zinn-(II)-chlorid dar. Zu deren Verminderung ist es bekannt, dem geschmolzenen Zinn mindestens 5 Gew.-% Antimon als Katalysator zuzusetzen. Es kann auch Antimon-(V)-chlorid zugegeben werden. Dies hat wiederum den Nachteil, daß das zugegebene oder gebildete Antimon-(V)-chlorid ebenfalls flüchtig ist und sich dabei zersetzt, wodurch die Notwendigkeit entsteht, das gebildete Zinn-(IV)-chlorid vom Antimon-(V)-chlorid beziehungsweise seinen Zersetzungsprodukten zu trennen. Alle bisher genannten Verfahren benötigen spezielle Vorrichtung zur Kondensation und Fraktionierung des gasförmig aus dem Reaktionsraum entweichenden Zinn-(IV)-chlorids.

Es ist ferner ein Verfahren bekannt, bei dem festes Zinn in Blockform mit Chlor so umgesetzt wird, daß die Reaktionswärme das Zinn zum Schmelzen bringt. Das geschmolzene Zinn tropft in flüssiges, gekühltes Zinn-(IV)-chlorid und erstarrt. In das Zinn-(IV)-chlorid wird von unten zusätzlich Chlor eingeleitet, welches mit dem erstarrten Zinn unter Bildung von weiterem Zinn-(IV)-chlorid reagiert. Das Schmelzen des Zinns durch die Reaktion mit Chlor kann dadurch reguliert werden, daß das durch die Reaktion entstandene gasförmige Zinn-(IV)-chlorid in einem Rückflußkühler so kondensiert wird, daß es flüssig auf die Schmelzzone des Zinns zurücktropft während unkondensierte Gase von unten her in die Schmelzzone des Zinns zurückgeleitet werden.

Der Nachteil dieses Verfahrens ist die schwierige Beherrschbarkeit der Schmelzzone. Die Zinnblöcke können leicht zusammensintern und einen Block bilden, der nur noch an der Oberfläche mit Chlor reagiert und schmilzt, wodurch ein Abtropfen des geschmolzenen Zinns in das flüssige Zinn-(IV)-chlorid nicht mehr gewährleistet ist. Ferner sind bei diesem Verfahren wie auch allen weiter oben beschriebenen, bei denen metallisches Zinn mit Chlor unter Schmelzen umgesetzt wird, aufwendige Werkstoffe notwendig, die bei der gegebenen hohen Temperatur gegen Chlorgas beständig sind. Insgesamt wird eine relativ komplizierte, kostspielige Apparatur benutzt.

In der US—A—1 897 360 wird ein diskontinuierliches Verfahren beschrieben, bei dem festes metallisches Zinn in Blöcken in flüssigem Zinn-(IV)-chlorid mit Chlor umgesetzt wird. Das Chlor wird unten in die Mischung von Zinn und Zinn-(IV)-chlorid in einer Menge eingeleitet, die nicht vollständig mit dem Zinn reagiert. Das beim ersten Durchgang nicht verbrauchte Chlor sammelt sich im Oberteil des Behälters, wird von dort abgezogen, gekühlt und zusammen mit neuem Chlor unten in der Behälter wieder eingeleitet. Ein Teil des flüssigen Zinn-(IV)-chlorids wird aus dem Reaktionsraum abgezogen, ebenfalls gekühlt und in den Reaktionsraum wieder eingeleitet. Während der Reaktion kommt die Flüssigkeit zum Sieden, die Zinn-(IV)-chlorid-Dämpfe werden zusammen mit dem überschüssigen Chlorgas gekühlt und zurückgeführt. Die Zinnfüllung soll immer vollständig von Zinn-(IV)-chlorid bedeckt sein, offensichtlich, um eine unkontrollierte Reaktion des metallischen Zinns mit dem im Gasraum vorhandenen überschüssigen Chlor zu vermeiden. Das erzeugte Zinn-(IV)-chlorid wird unten aus dem Reaktionsraum abgezogen. Die Reaktion so durchzuführen, daß alles Chlor im Zinn-(IV)-chlorid gelöst mit dem metallischen Zinn reagiert, wobei sich demnach kein überschüssiges Chlor im Gasraum über dem Zinn-(IV)-chlorid sammelt und im Kreis geführt wird, soll angeblich wirtschaftlich impraktikabel sein.

Bei dem zuletzt und bei dem davorstehend beschriebenen Verfahren enthält das erzeugte Zinn-(IV)-chlorid in der Regel noch beträchtliche Mengen gelöstes Chlor. Über eine Reinigung des Zinn-(IV)-chlorids ist in beiden Fällen nichts ausgesagt.

Alle bis jetzt erwähnten Verahren sind bereits seit über 40 Jahren bekannt. In neuerer Zeit wurde in der DE—A—24 17 078 ein Verfahren beschrieben, bei dem wiederum Chlor in flüssiges Zinn eingeleitet wird und zur Abführung der entstehenden Reaktionswärme gleichzeitig Zinn-(IV)-chlorid, vorteilhaft etwa das Siebenfache der Menge des durch die Chlorierung gebildeten Zinn-(IV)-chlorids. Wie diese neuere Veröffentlichung beweist, ist die Temperaturbeherrschung bei der Umsetzung von Chlor mit geschmolzenem Zinn nach wie vor ein Problem. Im übrigen hat auch das neuere Verfahren die Nachteile, die bei der Umsetzung von Zinn mit Chlor bei hohen Temperaturen auftreten [Bildung von Zinn-(II)-

chlorid, Korrosion, vergleichsweise aufwendige fraktionierte Kondensation des gebildeten Zinn-(IV)-chlorids]. In der genannten DE—A werden Verfahren, Zinn in Zinn-(IV)-chlorid bei Temperaturen unter 114°C bei atmosphärischem Druck mit Chlor umzusetzen, als "verhältnismäßig unwirksam" bezeichnet.

In der europäischen Patentanmeldung EP—A—57929 die gemäß Artikel 54(3) EPÜ al Stand der Technik gilt ist ein Verfahren beschrieben, das es gestattet, Zinn-(IV)-chlorid aus Zinn und Chlor kontinuierlich in einer einfachen Apparatur, ohne Korrosionsprobleme und ohne Verwendung einer Kondensations- beziehungsweise Rektifikationsapparatur in guter Reinheit zu erzeugen. Bei diesem Verfahren zur Herstellung von Zinn-(IV)-chlorid durch Umsetzung von überschüssigem metallischem Zinn mit Chlor in Gegenwart von flüssigem Zinn-(IV)-chlorid bei Temperaturen von 20 bis 90°C, gegebenenfalls unter Druck, wobei man das Chlor in den Reaktionsraum unten einleitet, das gebildete Zinn-(IV)-chlorid oben aus dem Reaktionsraum entnimmt, nach Kühlung in den Reaktionsraum unten wieder einführt und dabei soviel Zinn-(IV)-chlorid abführt, daß die Standhöhe des Zinn-(IV)-chlorids im Reaktionsraum gleich bleibt, werden je dm³ im Reaktionsraum vorhandenen Zinn-(IV)-chlorids 30 bis 300 Ndm³h⁻¹ Chlor eingeleitet, der Überschuß des Zinns auf mindestens dem vierfachen Gewicht des je Stunde eingeleiteten Chlorgewichtes gehalten und je 1 Ndm³h⁻¹ eingeleitetes Chlor 0,08 bis 0,3 dm³h⁻¹ Zinn-(IV)-chlorid im Kreis geführt, wobei das aus dem Kreislauf abgeführte Zinn-(IV)-chlorid in mindestens einem weiteren Nachbehandlungs-Reaktionsraum, der mit metallischem Zinn und Zinn-(IV)-chlorid gefüllt ist, ohne Zuführung von Chlor bei einer Temperatur von 60 bis 110°C und einer mittleren Verweilzeit von 1 bis etwa 7 h behandelt wird, anschließend filtriert und gegebenenfalls mit absorbierenden Mitteln in Kontakt gebracht wird.

Es wurde nun ein verbessertes Verfahren gefunden. Dieses Verfahren zur Herstellung von Zinn-(IV)-chlorid durch Umsetzung von überschüssigem metallischem Zinn mit Chlor in Gegenwart von flüssigem Zinn-(IV)-chlorid bei Temperaturen von 20 bis 90°C, gegebenenfalls unter Druck, wobei man das Chlor in den Reaktionsraum unten einleitet, das gebildete Zinn-(IV)-chlorid oben aus dem Reaktionsraum entnimmt, nach Kühlung in den Reaktionsraum unten wieder einführt und dabei soviel Zinn-(IV)-chlorid abführt, daß die Standhöhe des Zinn-(IV)-chlorids im Reaktionsraum gleichbleibt, ist dadurch gekennzeichnet, daß das metallische Zinn in Form rieselfähiger Körner von mindestens 1 mm Durchmesser kontinuierlich nach Maßgabe ihres Verbrauchs mindestens einem Reaktionsraum zugeführt wird.

Die Zinnkörner können verschiedene Größe und Gestalt haben. Sie können beispielsweise ellipsoidisch, tropfenförmig, linsenförmig sein oder die Gestalt geometrischer Körper mit abgerundeten Ecken und Kanten haben. Vorzugsweise sind die Körner weitgehend kugelförmig, wobei die Oberfläche der einzelnen Kugel Unregelmäßigkeiten (Erhebungen bzw. Vertiefungen) aufweisen kann.

Die Größe der einzelnen Zinnkörner innerhalb einer anzuwendenden Zinnmenge kann sehr unterschiedlich sein, sie sollte jedoch 1 mm Korndurchmesser (gemessen an der Stelle des größten Durchmessers) nicht unterschreiten, da dies zu Schwierigkeiten bei der Durchführung des erfindungsgemäßen Verfahrens führen kann, beispielsweise wird der Durchflußwiderstand des Zinn-(IV)-chlorids in den Reaktionsräumen unnötig hoch.

Der Bereich der Erfindung wird nicht verlassen, wenn die rieselfähigen Zinnkörner eine vergleichsweise geringe Beimischung, beispielsweise bis 20 Gew.-%, bezogen auf die Gesamtmischung, Körner von unter 1 mm Durchmesser enthalten.

Vorzugsweise sollen die rieselfähigen Zinnkörner einen Durchmesser von 1 bis 20 mm aufweisen. Besonders gute Ergebnisse werden erhalten, wenn die Zinnkörner einen Durchmesser von 3 bis 7 mm besitzen.

Es ist ferner von Vorteil, wenn die Zinnkörner in einer Mischung bezüglich ihrer Masse nicht mehr als 50 % nach oben bzw. unten, von einem Mittelwert abweichen. Die Zinnkörner sollten ferner vorteilhaft etwa gleiche Gesalt besitzen.

Nach oben ist der Durchmesser der Zinnkörner durch die Maße der zu verwendenden Apparatur begrenzt. Er sollte im allgemeinen nicht größer sein als 1/3 des Innendurchmessers, gemessen an der engsten Stelle, die in der Apparatur Zinnkörner enthält.

Die anzuwendenden Zinnkörper gleicher oder verschiedener Gestalt sind ausreichend reiselfähig, wenn sie ohne Stockung aus einem Trichter auslaufen, bei dem die Mantellinie des konischen Oberteils gegenüber der senkrechten Mittelachse um etwa 30° geneigt ist und dessen engster Durchtrittsquerschnitt dreimal so groß ist wie der Durchmesser des größten Zinnkorns in der zu messenden Mischung.

Die rieselfähigen Zinnkörner werden kontinuierlich nach Maßgabe ihres Verbrauchs dem Reaktionsraum oder den Reaktionsräumen zugeführt, in dem (denen) die Reaktion des Zinns mit Chlor in Gegenwart von Zinn-(IV)-chlorid und/oder die Nachbehandlung des gebildeten Zinn-(IV)-chlorids in Gegenwart von metallischem Zinn stattfindet. Hierzu kann zweckmäßig ein Tauchrohr verwendet werden, das von oben her in den Reaktionsraum hineinragt und dessen untere Öffnung unterhalb der Standhöhe des Zinn-(IV)-chlorids in dem Reaktionsraum endet. Dieses Tauchrohr wird zweckmäßig vollständig mit Zinnkörnern gefüllt gehalten, wozu ein beispielsweise zylindrischer Vorratsbehälter mit konischem Boden, der am oberen Ende des Tauchrohrs angebracht ist, dient. Dieser Vorratsbehälter wird kontinuierlich oder absatzweise mit rieselfähigen Zinnkörnern beschickt. Die kontinuierliche Zuführung in den Reaktionsraum nach Maßgabe des Verbrauchs erfolgt durch einfaches Nachrieseln der Zinnkörner unter ihrem eigenen Gewicht. Ein Überfüllen des Reaktionsraums tritt hierbei nicht auf.

Die rieselfähigen Zinnkörper können durch Gießen von geschmolzenem Zinn in entsprechende Formen oder Verteilen in Tropfen entsprechender Größe und Abkühlung der Tropfen erzeugt werden.

Durch das erfindungsgemäße Verfahren wird eine vollkontinuierliche Herstellung von Zinn-(IV)-chlorid ermöglicht und die Effektivität verbessert. Überraschenderweise tritt auch eine Verbesserung der Farbe des erzeugten Zinn-(IV)-chlorids ein. Die Reaktion ist bereits weitgehend abgeschlossen, wenn das Zinn-(IV)-chlorid den Reaktionsraum bzw. die Reaktionsräume verläßt, in denen das Zinn mit Chlor umgesetzt wird. Entsprechend verkürzt kann die Verweilzeit im Nachbehandlungs-Reaktionsraum gehalten werden. Es können vorteilhaft im Nachbehandlungs-Reaktionsraum niedrigere Temperaturen als beim Verfahren nach europäischer Patentanmeldung EP—A—57929 angewendet werden. Man arbeitet vorzugsweise bei 30 bis 60°C, wodurch eine weitere Farbverbesserung des Zinn-(IV)-chlorids erreicht wird. Ferner wird die Unfallgefahr beim Öffnen der Reaktoren zwecks Nachfüllen des Zinns vermieden, es tritt außerdem keine Umweltbelastung durch Austreten vergleichsweise geringer Mengen gasförmigen Zinn-(IV)-chlorids und Chlors auf.

Nachfolgende Beispiele sollen die Erfindung näher erläutern:

Die Hauptreaktion von metallischem Zinn mit Chlor in flüssigem Zinn-(IV)-chlorid wird in zwei senkrecht stehenden parallel geschalteten zylindrischen Glasrohren durchgeführt, von denen jedes eine Länge von 1100 mm und einen inneren Durchmesser von 80 mm aufweist. Jedes Rohr ist unten verschlossen und enthält im Unterteil in 100 mm Entfernung vom unteren Abschluß eine Lochplatte, deren Löcher einen Durchmesser von 2 mm aufweisen, die auf der Oberseite mit einem 0,5-mm-Edelstahlnetz bedeckt ist. Unterhalb der Siebplatte ist je ein Einleitungsrohr für Zinn-(IV)-chlorid und für Chlorgas angebracht. 770 mm oberhalb der Lochplatte ist seitlich an dem Glasrohr ein Ableitungsrohr für überlaufendes Zinn-(IV)-chlorid angebracht. Diese Überlaufrohre enthalten jeweils in kurzem Abstand von den 80-mm-Glasrohren ein Temperaturmeßstelle, anschließend sind sie zusammengeführt und laufen in den Unterteil einer Pumpenvorlage in Gestalt eines ebenfalls senkrecht stehenden Glasrohrs, das innen eine Rohrschlange enthält, die von Wasser als Kühlmittel durchflossen ist. In jedes der beiden Glasrohre, in denen die Hauptreaktion von Chlor mit metallischem Zinn stattfindet und die im Unterteil eine Lochplatte enthalten, ist von oben her ein Stahlrohr mit einem äußeren Durchmesser von 56 mm und einem inneren Durchmesser von 50 mm eingeführt, das 360 mm tief in das jeweilige Glasrohr eintaucht, am Ende des Glasrohres dichtschließend mit diesem verbunden ist, jedoch über das Glasrohr hinausragt und am Oberteil in einen Trichter endet, der mit einer abnehmbaren Kappe abgedeckt ist, durch die ein Einleitungsrohr und ein Ableitungsrohr für trockenen Stickstoff geführt ist. Das Stahlrohr dient zum Zuführen der metallischen Zinnkörner und endet im Glasrohr 130 mm unterhalb des Überlaufrohrs für Zinn-(IV)-chlorid. Die beiden Glasrohre, in denen die Hauptreaktion von Chlor mit metallischem Zinn stattfindet, enthalten je einen Doppelmantel, der von Wasser als Kühlflüssigkeit durchflossen ist und der außen von der Lochplatte bis zum Überlaufrohr reicht.

Das als Pumpenvorlage dienende senkrechte Rohr mit Schlangenkühler ist oben mit einer abnehmbaren Kappe verschlossen und enthält auf etwa 2/3 seiner Gesamtlänge einen Doppelmantel, der von Wasser als Kühlflüssigkeit durchflossen ist. Unterhalb der Zuführung des aus den Hauptreaktionsrohren abfließenden Zinn-(IV)-chlorids sind am Pumpenvorlagerohr seitlich zwei Abführungsrohre für Zinn-(IV)-chlorid angebracht. Das eine dieser beiden Ableitungsrohre ist über eine Pumpe mit den beiden Zuleitungsrohren, die jeweils unterhalb der Lochplatte in die Hauptreaktionsrohre eingeführt sind, verbunden. In diesen beiden Zuführungsrohren ist jeweils eine Temperaturmeßstelle angebracht. Die Zuführungsrohre für Chlorgas in den Unterteil der Hauptreaktionsrohre ist über eine Vorrichtung, die das Zurücksteigen von flüssigem Zinn-(IV)-chlorid verhindert, mit einer Chlorgasquelle verbunden.

Das zweite Ableitungsrohr für Zinn (IV)-chlorid läuft vom Unterteil der Pumpenvorlage zum Unterteil eines weiteren senkrecht stehenden Glasrohres, das zur Nachreaktion des erzeugten chlorhaltigen Zinn-(IV)-chlorids mit metallischem Zinn dient und das ähnlich aufgebaut ist wie die Rohre, in denen die Hauptreaktion stattfindet, jedoch mit dem Unterschied, daß die Gesamtlänge des Rohres 1400 mm beträgt, das Stahlrohr von oben her 500 mm tief in das Glasrohr eintaucht und der Abstand von der Lochplatte im Unterteil des Glasrohrs bis zum seitlichen Ablauf für flüssiges Zinn-(IV)-chlorid im Oberteil des Glasrohrs 1070 mm beträgt. Demzufolge ist der Abstand vom unteren Teil des eintauchenden Stahlrohrs bis zum seitlichen Abführungsrohr für flüssiges Zinn-(IV)-chlorid 270 mm. Dieses Abführungsrohr ist wiederum mit einer Temperaturmeßstelle versehen und mit einem Sammelgefäß für das erzeugte Zinn-(IV)-chlorid verbunden. Das 1400 mm lange Glasrohr, in dem die Nachreaktion stattfindet, enthält, wie die Hauptreaktionsrohre, einen Doppelmantel, der von Wasser als Temperierflüssigkeit durchflossen ist und außen von der Höhe der Lochplatte bis knapp unterhalb des seitlichen Abführungsrohres für Zinn-(IV)-chlorid läuft. Das Nachreaktionsrohr ist etwas tiefer aufgestellt als die beiden Glasrohre, in denen die Hauptreaktion stattfindet, so daß das gebildete Zinn-(IV)-chlorid über die Pumpenvorlage durch natürliches Gefälle in das Nachreaktionsrohr läuft.

Beispiel 1

Es wird die oben beschriebene Apparatur verwendet. Zunächst werden kugelförmige Zinnkörner von etwa 3 mm Durchmesser über die Stahlrohre mit trichterförmiger Erweiterung in die Glasrohre von 1100 mm und das Glasrohr von 1400 mm Länge eingefüllt, bis die Standhöhe der Zinnkörner bis in etwa halbe Höhe der trichterförmigen Erweiterung reicht. Diese Erweiterungen werden nun mit den Glaskappen verschlossen und über die an den Kappen angebrachten Einleitungsrohre ein schwacher Strom von trockenem Stickstoff eingeleitet. Der Stickstoff entweicht über die ebenfalls in den Kappen angebrachten Ableitungsrohre.

Nun werden die beiden Hauptreaktionsrohre, die Pumpenvorlage und das Nachreaktionsrohr jeweils bis zum seitlich angebrachten Überlauf mit Zinn-(IV)-chlorid von etwa 20°C gefüllt, anschließend wird Chlor über eine Meßvorrichtung in die beiden Teile unterhalb der gelochten Platte in die Hauptreaktionsrohre eingeleitet und die Doppelmantel-Kühlung dieser Reaktionsrohre in Betrieb gesetzt. Wenn die Temperatur des aus den Hauptreaktionsrohren aus dem oberen seitlichen Abgang abfließenden Zinn-(IV)-chlorids eine Temperatur, die 10°C unterhalb der weiter unten angegebenen später am Reaktorausgang gemessenen Temperatur erreicht hat, wird die Doppelmantel-Kühlung der Pumpenvorlage eingeschaltet und mit dem Umpumpen des Zinn-(IV)-chlorids in einer Menge von 80 dm³ · h⁻¹ begonnen. Das aus dem Nachreaktionsrohr abfließende Zinn-(IV)-chlorid wird im nachfolgenden Behälter gesammelt und das je Stunde erzeugte Volumen gemessen. Die Temperatur des Zinn-(IV)-chlorids wird an den Abgängen der beiden Hauptreaktionsrohre, am Abgang des Nachreaktionsrohrs und nach der Pumpe an den Zuführungsrohren zu den beiden Hauptreaktionsrohren ständig ermittelt, ebenso wird die zugeführte Chlormenge laufend bestimmt. Durch die Glaskappen auf den trichterförmigen Erweiterungen der Stahlrohre wird die Standhöhe der Zinnkörner beobachtet und in Zeitabständen Zinnkörner bis zur ursprünglichen Standhöhe nachgefüllt.

Nach 2 Stunden Betriebsdauer haben sich konstante Bedingungen eingestellt. Folgende Werte werden bestimmt:

Je Hauptreaktionsrohr eingeleitetes Chlor: 300 Ndm³ · h⁻¹;

Gesamtmenge des eingeleiteten Chlors: 600 Ndm³ · h⁻¹.

Umgepumptes Zinn-(IV)-chlorid 80 dm³ · h⁻¹

Erzeugte Menge an Zinn-(IV)-chlorid: 1580 cm³ · h⁻¹ = 3480 g · h⁻¹.

Aufgrund des eingeleiteten Chlors mögliche theoretische Ausbeute an Zinn-(IV)-chlorid: 3542 g · h⁻¹; Ausbeute: 98,2 % nach Verlassen der Hauptreaktoren.

Produktqualität nach Kühlung und Filtration: glasklar, farblos.

Gehalt an elementarem Chlor: <0,005 Gew.-%.

Temperatur des aus den Hauptreaktionsrohren abgeführten Zinn-(IV)-chlorids: 70°C.

Temperatur des den Hauptreaktionsrohren zugeführten Zinn-(IV)-chlorids: 50°C.

Temperatur des aus dem Nachbehandlungsreaktionsrohr abgeführten Zinn-(IV)-chlorids: 40°C.

Das Schüttgewicht der verwendeten Zinnkörper beträgt 4130 g · dm⁻³.

Jedes Hauptreaktionsrohr enthält 2338 cm³ Zinn-(IV)-chlorid, die von diesem Zinn-(IV)-chlorid bedeckte Menge des Zinns beträgt je Hauptreaktionsrohr 14 341 g. Im Nachreaktionsrohr sind 3164 cm³ Zinn-(IV)-chlorid enthalten.

In die Hauptreaktionsrohre wird je dm³ Zinn-(IV)-chlorid 128 Ndm³ · h⁻¹ Chlor eingeleitet; der Überschuß des Zinns beträgt das 14,9 fache des Gewichtes des je Stunde eingeleiteten Chlors.

Je Ndm³ · h⁻¹ eingeleitetes Chlor werden 0,26 dm³ · h⁻¹ Zinn-(IV)-chlorid umgepumpt.

Die Verweilzeit des Zinn-(IV)-chlorids im Nachreaktionsrohr beträgt 2,0 Stunden.

Beispiel 2

Es wird die gleiche Apparatur verwendet, wie oben beschrieben, und ebenso gearbeitet wie in Beispiel 1, jedoch mit folgenden Unterschieden: Die Menge des je Hauptreaktionsrohr eingeleiteten Chlors beträgt 500 Ndm³ · h⁻¹; in der Pumpenvorlage ist auch der Schlangenkühler eingeschaltet, und der Doppelmantel des Nachreaktionsrohrs wird mit Wasser von 60°C beschickt.

Nach 2 Stunden Betriebsdauer haben sich konstante Bedinungen eingestellt. Folgende Werte werden bestimmt:

Je Hauptreaktionsrohr eingeleitetes Chlor: 500 Ndm³ · h⁻¹;

Gesamtmenge des eingeleiteten Chlors: 1000 Ndm³ · h⁻¹.

Umgepumptes Zinn-(IV)-chlorid: 100 dm³ · h⁻¹.

Erzeugte Menge an Zinn-(IV)-chlorid: 2600 cm³ · h⁻¹ = 5800 g · h⁻¹.

Aufgrund des eingeleiteten Chlors mögliche theoretische Ausbeute an Zinn-(IV)-chlorid: 5904 g · h⁻¹;

effektive Ausbeute: 98,2% nach Verlassen der Hauptreaktoren. Produktqualität nach Kühlung und Filtration: glasklar, schwach gelblich gefärbt.

Gehalt an elementarem Chlor: <0,005 Gew.-%.

Temperatur des aus den Hauptreaktionsrohren abgeführten Zinn-(IV)-chlorids: 75°C.

Temperatur des den Hauptreaktionsrohren zugeführten Zinn-(IV)-chlorids: 25°C.

Temperatur des aus dem Nachbehandlungs-Reaktionsrohr abgeführten Zinn-(IV)-chlorids: 60°C.

Das Schüttgewicht der verwendeten Zinnkörner, der Inhalt jedes Hauptreaktionsrohres an Zinn-(IV)-chlorid, die von diesem Zinn-(IV)-chlorid bedeckte Menge des Zinns und die im Nachreaktionsrohr vorhandene Menge Zinn-(IV)-chlorid sind die gleichen wie in Beispiel 1.

In die Hauptreaktionsrohre wird je dm³ Zinn-(IV)-chlorid 214 Ndm³ · h⁻¹ Chlor eingeleitet. Der Überschuß des Zinns beträgt das 8,9 fache des Gewichtes des je Stunde eingeleiteten Chlors.

Je Ndm³ · h⁻¹ eingeleitetes Chlor werden 0,2 dm³ · h⁻¹ Zinn-(IV)-chlorid umgepumpt.

Die Verweilzeit des Zinn-(IV)-chlorids im Nachreaktionsrohr beträgt 1,2 Stunden.

Beispiel 3

Es wird die gleiche Apparatur verwendet, wie oben beschrieben, und ebenso bearbeitet wie in Beispiel 1, jedoch mit folgenden Unterschieden: Die Apparatur wird mit Zinnkörnern gefüllt, die weitgehend kugelförmige Gestalt und einen Durchmesser von etwa 6 mm aufweist, die Menge des je Hauptreaktionsrohr eingeleitetn Chlors beträgt 400 Ndm$^3 \cdot$ h$^{-1}$; in der Pumpenvorlage ist auch der Schlangenkühler eingeschaltet, und der Doppelmantel des Nachreaktionsrohrs wird mit Wasser von 50°C beschickt.

Nach 2 Stunden Betriebsdauer haben sich konstante Bedingungen eingestellt. Folgende Werte werden bestimmt:

Je Hauptreaktionsrohr eingeleitets Chlor: 400 Ndm$^3 \cdot$ h$^{-1}$;

Gesamtmenge des eingeleiteten Chlors: 800 Ndm$^3 \cdot$ h$^{-1}$.

Umgepumptes Zinn-(IV)-chlorid: 100 dm$^3 \cdot$ h$^{-1}$.

Erzeugte Menge an Zinn-(IV)-chlorid: 2035 cm$^3 \cdot$ h$^{-1}$=4540 g $\cdot$ h$^{-1}$.

Aufgrund des eingeleiteten Chlors mögliche theroretische Ausbeute an Zinn-(IV)-chlorid: 4723 g $\cdot$ h$^{-1}$;

effektive Ausbeute: 96,1 % nach Verlassen der Hauptreaktoren.

Produktqualität nach Kühlung und Filtration: glasklar, farblos.

Gehalt an elementarem Chlor: <0,005 Gew.-%.

Temperatur des aus den Hauptreaktionsrohren abgeführten Zinn-(IV)-chlorids: 70°C.

Temperatur des den Hauptreaktionsrohren zugeführten Zinn-(IV)-chlorids: 45°C.

Temperatur des aus dem Nachbehandlungs-Reaktionsrohr abgeführten Zinn-(IV)-chlorids: 50°C.

Das Schüttgewicht der verwendeten Zinnkörner beträgt 4040 g $\cdot$ dm$^{-3}$.

Jedes Hauptreaktionsrohr enthält 2381 cm$^3$ Zinn-(IV)-chlorid, die von diesem Zinn-(IV)-chlorid bedeckte Menge des Zinns beträgt je Hauptreaktionsrohr 14 029 g. Im Nachreaktionsrohr sind 3356 cm$^3$ Zinn-(IV)-chlorid enthalten.

In die Hauptreaktionsrohre wird je dm$^3$ Zinn-(IV)-chlorid 168 Ndm$^3 \cdot$ h$^{-1}$ Chlor eingeleitet; der Überschuß des Zinns beträgt das 10,9 fache des Gewichtes des je Stunde eingeleiteten Chlors.

Je Ndm$^3 \cdot$ h$^{-1}$ eingeleitetes Chlor werden 0,25 dm$^3 \cdot$ h$^{-1}$ Zinn-(IV)-chlorid umgepumpt.

Die Verweilzeit des Zinn-(IV)-chlorids im Nachreaktionsrohr beträgt 1,65 Stunden.

**Patentansprüche**

1. Verfahren zur Herstellung von Zinn-(IV)-chlorid durch Umsetzung von überschüssigem metallischem Zinn mit Chlor in Gegenwart von flüssigem Zinn-(IV)-chlorid bei Temperaturen von 20 bis 90°C, gegebenenfalls unter Druck, wobei man das Chlor in den Reaktionsraum unten einleitet, das gebildete Zinn-(IV)-chlorid oben aus dem Reaktionsraum entnimmt, nach Kühlung in den Reaktionsraum unten wieder einführt und dabei soviel Zinn-(IV)-chlorid abführt, daß die Standhöhe des Zinn-(IV)-chlorids im Reaktionsraum gleichbleibt, dadurch gekennzeichnet, daß das metallische Zinn in Form rieselfähiger Körner von mindestens 1 mm Durchmesser kontinuierlich nach Maßgabe ihres Verbrauchs mindestens einem Reaktionsraum zugeführt wird.

2. Verfahren nach Anspruch 1, dadurch gekennzeichnet, daß, das ans dem Kreislauf abgeführte Zinn-(IV)-chlorid in einem Nachbehandlungs-Reaktionsraum behandelt wird, in dem das Zinn-(IV)-chlorid ohne Zuführung von Chlor mit metallischem Zinn in Kontakt steht und daß in diesem Nachbehaldungs-Reaktionsraum eine Temperatur von 30 bis 60°C eingestellt wird.

**Revendications**

1. Procédé pour préparer du chlorure d'étain (IV) par réaction d'un excès d'étain métallique avec du chlore en présence de chlorure d'étain (IV) liquide, à des températures de 20 à 90°C et éventuellement sous pression, selon lequel on introduit le chlore dans l'espace réactionnel par en bas, on fait sortir de l'espace réactionnel, par en haut, le chlorure d'étain (IV) formé et, après refroidissement, on le réintroduit dans l'espace réactionnel par en bas tout en retirant une quantité de chlorure d'étain (IV) telle que le niveau du chlorure d'étain (IV) dans l'espace réactionnel reste fixe, ce procédé étant caractérisé en ce que de l'étain métallique est introduit sous la forme de grains fluents d'un diamètre d'au moins 1 mm, en continu, au fur et à mesure qu'il est consommé, dans au moins un espace réactionnel.

2. Procédé selon la revendication 1 caractérisé en ce que le chlorure d'étain (IV) retiré du circuit est traité dans un espace réactionnel de traitement complémentaire dans lequel le chlorure d'étain (IV) est en contact avec de l'étain métallique sans que du chlore soit introduit et en ce qu'on ajuste la température entre 30 et 60°C dans cet espace réactionnel de traitement complémentaire.

**Claims**

1. A process for the production of tin(IV)-chloride by reacting excess metallic tin with chlorine in the presence of liquid tin(IV)chloride at temperatures of 20 to 90°C, optionally under pressure, in which process chlorine is passed from below into the reaction chamber, the tin(IV)-chloride formed is removed at the top from the reaction chamber and is reintroduced into the reaction chamber from below after cooling and in which as much tin(IV)chloride is discharged as is required for the level of tin(IV)chloride in the reaction chamber to remain constant, characterised in that the metallic tin is continuously fed into the reaction chamber in form of free-flowing granules having a diameter of at least 1 mm according to the measure of their consumption.

2. The process as claimed in claim 1, characterised in that the tin(IV)chloride being discharged from the recycled product is treated at a temperature being adjusted to 30 to 60°C in an aftertreatment reaction chamber in which the tin(IV)-chloride is in contact with metallic tin without introduction of any chlorine.